# EUROPÄISCHE PATENTSCHRIFT

(11) **EP 2 939 501 B1**
(45) Veröffentlichungstag und Bekanntmachung des Hinweises auf die Patenterteilung: **12.06.2019**
(21) Anmeldenummer: 13830168.4
(22) Anmeldetag: 20.12.2013
(51) Int. Cl.: H02M 7/538, H02M 7/48, H05B 33/08

(54) **BETRIEB VON LEUCHTMITTELN MIT EINEM RESONANTEN KONVERTER**
OPERATION OF LIGHTING MEANS BY MEANS OF A RESONANT CONVERTER
FONCTIONNEMENT DE DISPOSITIFS LUMINEUX AU MOYEN D'UN CONVERTISSEUR RÉSONANT

(30) Priorität: 28.12.2012 DE 102012224513
(43) Veröffentlichungstag der Anmeldung: 04.11.2015
(73) Patentinhaber: Tridonic GmbH & Co KG, 6851 Dornbirn (AT)
(72) Erfinder: VONACH, Christoph, 6850 Dornbirn (AT)
(74) Vertreter: Rupp, Christian
(86) Internationale Anmeldenummer: PCT/AT2013/000213
(87) Internationale Veröffentlichungsnummer: WO 2014/100844

(56) Entgegenhaltungen:
- EP-A1- 1 374 642
- EP-A1- 2 484 180
- WO-A1-2010/064166
- DE-A1-102010 031 244
- US-A1- 2012 170 332

## Beschreibung

Die vorliegende Erfindung bezieht sich ganz allgemein auf den Betrieb von LEDs, wobei darunter anorganische LEDs wie auch organische LEDs (OLEDs) zu verstehen sind.

Grundsätzlich ist es bereits bekannt, eine LED-Strecke, die eine oder mehrere in Serie geschaltete LEDs aufweisen kann, ausgehend von einem Betriebsgerät aufweisend eine Konstantstromquelle mit elektrischer Leistung zu versorgen. Es ist ebenfalls bekannt, dass zur Erzeugung dieser elektrischen Leistung das Betriebsgerät einen resonanten Konverter beispielsweise in Form einer LLC-Schaltung umfasst.

Die Erfindung bezieht sich nunmehr auf eine Schaltung, bei der eine LLC-Schaltung ausgehend von einer PFC-Schaltung versorgt wird. Die Ausgangsspannung der LLC-Schaltung wird beispielsweise über einen Transformator potentialgetrennt, anschließend beispielsweise einer weiteren Konverterstufe, insbesondere einem Konstantstrom- bzw. Buck-Konverter zugeführt, der wiederum die LED-Strecke versorgt.

Ziel der LLC-Schaltung ist es dabei, auf der Sekundärseite der Potentialtrennung eine konstante Spannung zu erzeugen. Bei dieser Ausgestaltung kann bekanntlich diese konstante Spannung derart erzeugt werden, dass die LLC-Schaltung mit einer konstanten Frequenz im Bereich der Resonanz betrieben wird.

Aus der WO 2011/039678 A1 ist ein dimmbarer LED-Treiber bekannt.

Aus der DE 10 2010 031254A1 ist ein modulares LED-Beleuchtungssystem bekannt.

Aus der WO 2010 064166 A1 ist eine EMI-Verringerungsschaltung für eine aktiv getaktete PFC-Konverterschaltung bekannt.

Die vorliegende Erfindung hat es sich nunmehr zur Aufgabe gesetzt, die EMV-Verträglichkeit eines derartigen Betriebsgeräts mit resonantem Konverter zu verbessern.

Um nunmehr das EMV-Spektrum der vorzugsweise mit konstanter Frequenz betriebenen LLC-Schaltung zu verbessern, ist gemäß der Erfindung vorgesehen, dass gezielt ein Frequenzsweep dem getakteten Betrieb der LLC-Schaltung aufgeschlagen wird. Dadurch kann einer konstanten Betriebsfrequenz der LLC-Schaltung entgegengewirkt werden und somit die EMV-Verträglichkeit verbessert werden. Die als Vorwärts- bzw. Feedforward-Steuerung definierte Modulierung der Betriebsfrequenz des Konverters ist dabei abhängig von einem Dimmwert der Leuchtmittel.

Insbesondere bei der Steuerung der LLC-Schaltung, die vorzugsweise mit konstanter Schaltfrequenz zu betreiben wäre, wird gezielt eine Frequenzveränderung durchgeführt. Diese Frequenzveränderung wird als sogenannter "Sweep-Modus" oder auch als "wobbeln" bezeichnet. Insbesondere wird dabei eine zyklisch wiederkehrende Beschleunigung und Verlangsamung der im zeitlichen Mittel konstant gehaltenen Schaltfrequenz durchgeführt.

Die Betriebsfrequenz der LLC-Schaltung wird erfindungsgemäß als Vorwärts- bzw. Feedforward-Steuerung moduliert. Die Betriebsfrequenz wird somit mit einem sich stufenweise verändernden Wert beaufschlagt, der insbesondere unabhängig von den Zuständen der Regelstrecke für die LLC-Schaltung.

Die Erfindung betrifft einen Vorwärts-Stellbetrieb, d.h. die Frequenz-Sweep-Kurve ist fest vorgegeben und wird ohne Mitwirkung einer Feedback-Schleife der LLC-Schaltung aufgeprägt. Die Erfindung betrifft also nicht etwaige sich zufällig ergebenden Frequenz-Sweeps, beispielsweise aufgrund einer Regelschleife.

Der erfindungsgemäße gezielte Sweep-Modus stellt sich also nicht durch den Betrieb einer Regelschleife ein, sondern es ist vorgesehen, dass im Sinne eines Stellbetriebs der erfindungsgemäße Frequenz-Sweep einem getakteten Element der LLC-Schaltung aufgeprägt wird. Der erfindungsgemäße Frequenz-sweep ist in einem Vorwärtstellbetrieb vorgesehen, und ergibt sich also nicht durch eine Regelschleifenaktivität.

Die Aufgabe wird erfindungsgemäß gelöst durch die Merkmale der unabhängigen Ansprüche. Die abhängigen Ansprüche bilden den zentralen Gedanken der Erfindung in besonders vorteilhafter Weise weiter.

Ein erster Aspekt der Erfindung bezieht sich auf ein Betriebsgerät für Lasten in Form von Leuchtmitteln, insbesondere für LEDs, aufweisend einen getakteten Konverter umfassend ein Schaltelement, und eine Steuereinheit zum Schalten des Schaltelements mit einer Betriebsfrequenz. Die Betriebsfrequenz des Konverters ist als Vorwärts- bzw. Feedforward-Steuerung moduliert.

Ein weiterer Aspekt der Erfindung bezieht sich auf ein Verfahren zum Betrieb eines Betriebsgeräts für Lasten in Form von Leuchtmitteln, insbesondere für LEDs. Das Betriebsgerät weist einen getakteten Konverter mit einem Schaltelement auf. Das Schaltelement wird mit einer Betriebsfrequenz geschaltet. Die Betriebsfrequenz des Konverters ist als Vorwärts- bzw. Feedforward-Steuerung modulierbar.

Ein weiterer Aspekt der Erfindung bezieht sich auf einen Steuerbaustein für ein Betriebsgerät, insbesondere integrierte Schaltung wie bspw. ASIC, Mikrocontroller oder Hybridversion davon, dadurch gekennzeichnet, dass er zur Unterstützung eines derartigen Verfahrens ausgelegt ist.

Das Schaltelement kann als Wechselrichter und insbesondere als Halbbrücken-Wechselrichter ausgestaltet sein.

Der Konverter kann einen Resonanzkreis umfassen, vorzugsweise in Form eines LLC-Resonanzkreises.

Der Resonanzkreis kann als Serienresonanzkreis oder Parallelresonanzkreis ausgestaltet sein.

Der Konverter kann am Ausgang einer PFC-Schaltung angeschlossen sein und mit einer von der PFC-Schaltung erzeugten Busspannung gespeist sein.

Die Betriebsfrequenz der PFC-Schaltung kann als Vorwärts- bzw. Feedforward-Steuerung moduliert sein.

Dem Konverter kann eine galvanische Entkopplung in Form beispielsweise eines Transformators nachgeschaltet sein. Dem Transformator kann ein weiteren Konverter zur Erzeugung eines Konstantstroms für die Leuchtmittel nachgeschaltet sein.

Bevor die Betriebsfrequenz des Konverters als Vorwärts- bzw. Feedforward-Steuerung moduliert wird, kann zunächst ein Nominalwert für die Betriebsfrequenz berechnet werden.

Weitere Vorteile, Merkmale und Eigenschaften der Erfindung werden aus der folgenden Beschreibung bevorzugter Ausführungsbeispiele und unter Bezugnahme auf die beigefügten Figuren ersichtlich werden.
Fig. 1 zeigt schematisch den Aufbau eines erfindungsgemäßen Beleuchtungssystems.
Fig. 2 zeigt ein Ausführungsbeispiel für einen resonanten Konverter in Form eines Wechselrichters mit folgendem Resonanzkreis und Transformator.
Fig. 3 zeigt ein Beispiel für die erfindungsgemäße Änderung der Betriebsfrequenz des Konverters als Vorwärts- bzw. Feedforward-Steuerung.

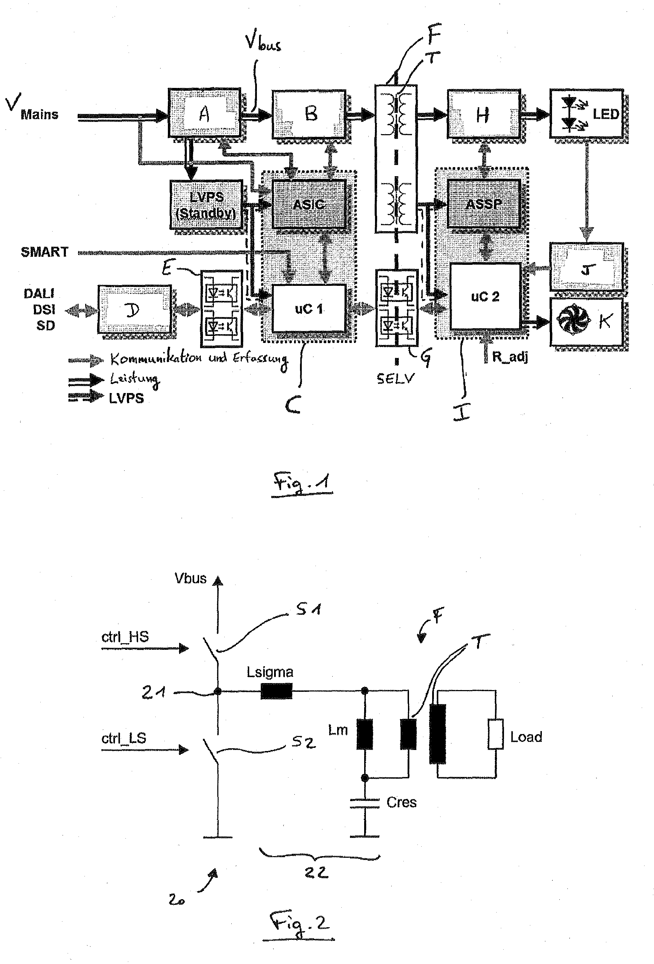

In Zusammenhang mit Fig. 1 wird der allgemeine Aufbau des erfindungsgemäßen Beleuchtungssystems für eine beispielsweise LED-basierte Beleuchtung erläutert. Es können sowohl anorganische LEDs und/oder organische LEDs (OLED) eingesetzt werden. Alternativ können auch andere Leuchtmittel wie beispielsweise Halogenlampen oder Gasentladungslampen betrieben werden.

Das Beleuchtungssystem wird vorzugsweise mit einer Eingangsspannung Vmains, insbesondere einer Netz-Wechselspannung, versorgt. Diese Eingangsspannung Vmains wird einer Leistungsfaktorkorrektur- oder PFC(Power Factor Correction)-Schaltung A zugeführt, welche eine aktive Leistungsfaktorkorrektur durchführt. Typischerweise wird die Eingangsspannung Vmains einer der PFC-Schaltung A vorgeschalteten Gleichrichter-Schaltung (nicht gezeigt) zugeführt, so dass in diesem Fall die gleichgerichtete Eingangsspannung am Eingang der PFC-Schaltung A anliegt.

Die Ausgangsspannung der PFC-Schaltung A ist eine Busspannung Vbus in Form einer DC-Spannung bzw. einer im Wesentlichen konstanten Spannung. Ausgehend von einer 230 Volt Netz-Wechselspannung kann die Busspannung Vbus beispielsweise 400 Volt betragen. Aufgrund der in Europa geltende Netzspannungs-Frequenz von 50 Hz weist die von der PFC-Schaltung bereitgestellte Busspannung Vbus üblicherweise einen Rippel mit einer Frequenz von 100 Hz auf. In den USA ist beispielsweise eine Frequenz von 120 Hz zu beobachten.

Bei dem PFC kann es sich beispielsweise um einen Hochsetzsteller (Boost-Konverter), Sperrwandler (Buck-Boost-Konverter, einen isolierten Sperrwandler (Flyback-Konverter) oder auch SEPIC Konverter handeln. Alternativ kann auch die PFC-Schaltung A weggelassen werden, so dass der resonante Konverter B von der Eingangsspannung Vmains gespeist wird.

Die Busspannung Vbus wird einem resonanten Konverter B zugeführt. Der resonante Konverter B generiert ausgehend von der Busspannung Vbus eine konstante Spannung. Als bevorzugtes Ausführungsbeispiel kann der resonante Konverter B in Form einer in Fig. 2 dargestellten LLC-Schaltung ausgestaltet sein. Der resonante Konverter B kann zur Erzeugung einer konstanten Spannung ausgestaltet sein. Der resonante Konverter B kann alternativ zur Erzeugung eines konstanten Stroms ausgestaltet sein.

Weiterhin ist eine Steuereinheit C vorgesehen, die insbesondere als integrierte Schaltung, wie beispielsweise ASIC oder Mikroprozessor bzw. Hybrid davon implementiert sein kann. Im Ausführungsbeispiel ist die Steuereinheit C in Form einer Hybridversion mit einerseits einem ASIC und andererseits einen Mikrocontroller bzw. Mikroprozessor uC1.

Wie schematisch in Fig. 1 gezeigt, steuert diese Steuereinheit C aktive Schaltelemente sowohl der PFC-Schaltung A als auch des resonanten Konverters B an. Als Schaltelement kommt für den resonanten Konverter B insbesondere eine Halbbrücke in Frage, s. Fig. 2.

Die Steuereinheit C kann über Programmiereingänge verfügen, wodurch eine Programmierung oder Kalibrierungsprogrammierung der Steuereinheit C möglich ist. Eine solche Programmierung oder Kalibrierungsprogrammierung kann entsprechend empfangenen SMART-Signalen oder DALI-, DSI- bzw. SD-Signalen erfolgen.

Die Steuereinheit C kommuniziert insbesondere über eine galvanische Entkopplung E mit einer Schnittstelle D. Diese Schnittstelle D hat Anschlüsse zur Anbindung eines externen analogen oder digitalen Busses (nicht gezeigt), der beispielsweise gemäß dem DALI-Industriestandard ausgebildet sein kann. Dadurch können Daten gemäß diesem Protokoll bi-direktional oder auch unidirektional übermittelt werden. Alternativ oder zusätzlich können aber auch unidirektionale oder bidirektionale Signale an dieser Schnittstelle D gemäß anderen Standards übertragen werden.

Die von dem resonanten Konverter B erzeugte DC-Spannung bzw. konstante Spannung wird einer galvanischen Entkopplung F insbesondere in Form eines Transformators T zugeführt. Der Transformator T ist eingangsseitig mit dem resonanten Konverter gekoppelt, ausgangsseitig ist er mit einem weiteren Konverter H zur Erzeugung eines Konstantstroms. Diese Konstantstromquelle kann z.B. als Buck-Konverter ausgestaltet sein.

Die Konstantstromquelle H versorgt die angeschlossenen Leuchtmittel, insbesondere LEDs, mit Konstantstrom. Alternativ kann zwischen der Konstantstromquelle H und den Leuchtmitteln mindestens eine weitere Konverterstufe in Form einer weiteren Konstantstromquelle (nicht gezeigt) vorgesehen sein, wobei diese Konverterstufen jeweils voneinander getrennte, unabhängige Leuchtmittel insbesondere LED-Strecken ansteuern können.

Alternativ kann auch die gezeigte Konstantstromquelle H weggelassen werden, so dass der Ausgang des resonanten Konverters B bzw. der Ausgang der galvanischen Entkopplung F direkt die Leuchtmittel versorgen könnte. Die LED-Strecke kann entsprechend auch ausgehend,von der LLC-Schaltung versorgt werden.

Der weitere Konverter H kann sowohl als getaktete Konstantstromquelle - also beispielsweise als Tiefsetzsteller, auch Buck-Konverter genannt, oder isolierter Sperrwandler, auch Flyback-Konverter genannt - oder als Linearregler - realisiert mit Transistoren oder integrierten Schaltkreisen - ausgeführt sein.

Weiterhin ist für den weiteren Konverter H eine eigene Steuereinheit I vorgesehen, die wiederum als Mikrocontroller, ASIC oder Hybrid davon ausgebildet sein kann. Diese Steuereinheit I ist im Ausführungsbeispiel der Fig. 1 als Hybridversion ausgestaltet, aufweisend einen ASSP (application-specific standard product) - auch anwendungsspezifisches Standardprodukt genannt - und einen Mikrocontroller uC2.

Die PFC-Schaltung A leitet die Eingangsspannung Vmains einer Niederspannungs-Stromversorgung (low voltage power supply) LVPS, die die Steuereinheit C für den resonanten Konverter B mit Spannung versorgt, weiter. Die Steuereinheit I für den weiteren Konverter H wird über eine sekundärseitige Wicklung des Transformators T mit Spannung versorgt.

Darüber hinaus kann die Steuereinheit I über eine galvanische Entkopplung G mit der Steuereinheit C des resonanten Konverters B unidirektional oder bidirektional in Datenkommunikation stehen.

Die sekundärseitige Steuereinheit I des weiteren Konverters H erhält vorzugsweise Rückführgrößen aus dem Bereich des Leuchtmittels bzw. der LEDs. Die Steuereinheit I ist insbesondere für die Regelung der LEDs auf einen bestimmten Dimmpegel verantwortlich. Dabei wird der Strom durch die LEDs geregelt, vorzugsweise abhängig von den genannten Rückführgrößen. Es kann zum korrekten Betrieb der LEDs beispielsweise auch eine Rückführgröße wie die Temperatur der LEDs mittels eines Temperatur-Sensors J erfasst und von der Steuereinheit I überwacht werden.

Zusätzlich kann ein passives oder vorzugsweise aktives, insbesondere von der Steuereinheit I angesteuertes Kühlmittel verbunden, bspw. ein Lüfter bzw. Ventilator K oder eine Kühleinheit. Die Steuereinheit I kann beispielsweise abhängig von der erfassten Temperatur den Lüfter K zum Abkühlen der LEDs steuern.

Die von der Steuereinheit I durchgeführte Regelung kann auch auf Basis von Sollwerten für die Helligkeit der LEDs erfolgen. Solche Sollwerte können über die Schnittstelle D, die galvanische Entkopplung E, die Steuereinheit C und schließlich über die galvanische Entkopplung G der Steuereinheit I zugeführt werden. Sollwerte können auch direkt an einem Anschluss der Steuereinheit I z.B. von einem Benutzer angegeben werden; dabei kann ein Widerstandswert R_adj an einem Anschluss der Steuereinheit I in bekannter Weise den Sollwert bestimmen.

Fig. 2 zeigt ein Ausführungsbeispiel für einen resonanten Konverter B.

In Fig. 2 ist gezeigt, dass die Ausgangsspannung der PFC-Schaltung A, nämlich die Busspannung Vbus, einem Wechselrichter 20 zugeführt ist, der beispielsweise als Halbbrücken-Wechselrichter mit zwei Schaltern S1, S2 ausgebildet sein kann. Die Ansteuersignale für die Taktung der Schalter S1, S2 kann in bekannter Weise von der Steuereinheit C erzeugt werden. Der potentialhöhere Schalter S1 wird vom Signal ctrl_HS gesteuert, der potentialniedrigere Schalter S2 vom Signal ctrl_LS.

An den Mittenpunkt 21 des Wechselrichters 10 schließt sich im dargestellten Beispiel ein Resonanzkreis, hier als Serienresonanzkreis ausgebildet, nämlich ein LLC-Resonanzkreis 22, an. Im dargestellten Beispiel weist dieser Resonanzkreis 22 eine erste Induktivität Lsigma, eine Primärwicklung des Transformators T und einen Kondensator Cres auf.

Die Primärwicklung des Transformators T weist dabei eine parallele Induktivität Lm auf, die den Magnetisierungsstrom führt.

Auf den Transformator T folgt eine Last Load, die mit einer im Vergleich zur Busspannung Vbus heruntergesetzten Versorgungsspannung gespeist werden kann. Nach dem Ausführungsbeispiel der Fig. 1 umfasst die Last den weiteren Konverter H und die LEDs. Am Ausgang des Transformators T können zusätzlich Elemente (nicht gezeigt) zur Glättung und Stabilisierung der Ausgangsspannung vorhanden sein.

In Fig. 2 ist der Resonanzkreis 22 als Serienresonanzkreis ausgebildet. Alternativ kann die Erfindung genauso auch Anwendung auf andere Resonanzschaltungen wie beispielsweise Parallelresonanzschaltungen finden. Der erfindungsgemäße Resonanzkreis kann entsprechend als Parallelresonanzkreis ausgebildet sein, bei welchem der Resonanz-Kondensator Cres in Parallel zur Last und nämlich in Parallel zur Primärwicklung des Transformators T geschaltet ist. Die Kombination des Wechselrichters 20 mit dem Resonanzkreis 22 bildet einen durch den Transformator T isolierenden DC/DC-Wandler als Energie übertragenden Konverter.

Die Schalter S1, S2 des Wechselrichters 20 werden vorzugsweise in der Nähe der Resonanzfrequenz des Resonanzkreises oder in der Nähe einer harmonischen einer Resonanz des Ausgangskreises gearbeitet. Die Ausgangsspannung des resonanten Konverters bzw. der galvanischen Entkopplung F ist eine Funktion der Frequenz der Ansteuerung der Schalter S1, S2 des Wechselrichters 20, hier als Halbbrücken-Wechselrichter.

Der in Fig. 1 gezeigte Konverter B ist nicht auf einen resonanten Konverter, und insbesondere nicht auf den in Fig. 2 gezeigte LLC-Konverter, beschränkt. Die LLC-Schaltung stellt ein bevorzugtes Beispiel dar. Anstelle einer LLC-Schaltung kann der erfindungsgemäße Konverter B aber auch eine PWM (pulsweitenmodulierte)-getaktete Halbbrückenschaltung oder einen Flyback-Wandler aufweisen.

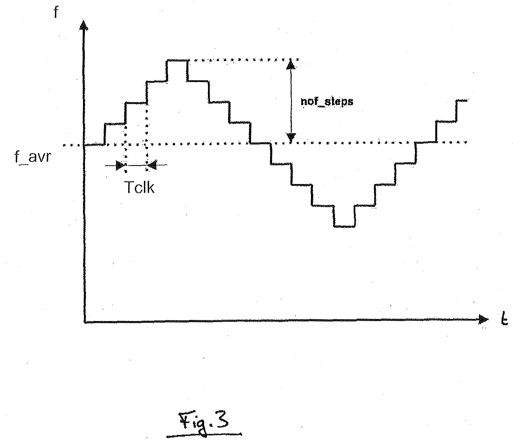

Fig. 3 zeigt ein Beispiel für die erfindungsgemäße Änderung der Betriebsfrequenz des Konverters B als Vorwärts- bzw. Feedforward-Steuerung.

Die X-Achse stellt dabei den grundsätzlichen zeitlichen Verlauf der Einschaltzeitdauer der Schalter S1, S2 ohne Skalierung dar. Auf der Y-Achse ist die zeitliche Dauer der Einschaltzeit der Schalter S1, S2 wiedergegeben.

Der Wert "f_avr" entspricht dem zeitlichen Mittelwert der Betriebsfrequenz des resonanten Konverters B, d.h. dem zeitlichen Mittelwert der Betriebsfrequenz der Schalter S1, S2.

Ausgehend von dem nominalen Wert der Einschaltzeit oder der Frequenz für die Schalter S1, S2 des resonanten Konverters B wird dieser nominale Wert stufenweise inkrementiert und dekrementiert. Der zeitliche Abstand des stufenweisen Inkrementierens und Dekrementierens durch den Wert "Tclk" bestimmt werden. Das Inkrementieren bzw. Dekrementieren wiederholt sich zyklisch und erfolgt um den nominalen Wert derart, dass der Mittelwert der Einschaltzeit oder Frequenz dem nominalen Wert entspricht. Das Inkrementieren bzw. Dekrementieren wird von der Steuereinheit C durchgeführt.

Mit anderen Worten erfolgt eine Beschleunigung und Verlangsamung der im zeitlichen Mittel konstant gehaltenen Schaltfrequenz. Bzw. es wird eine Verlängerung und Verkürzung der im zeitlichen Mittel konstant gehaltenen Einschaltzeitdauer der Schalter S1, S2 durchgeführt.

Der Wert "nof_steps" definiert den Frequenz-Jitter bzw. der Einschaltzeit-Jitter für die Schalter S1, S2. Dieser Wert definiert die Anzahl der Inkrementierungs- bzw. Dekrementierungs-Schritte ausgehend vom Mittelwert "f_avr". Jede Änderung der Einschaltzeitdauer kann eine Verlängerung oder Verkürzung im Bereich einer Nanosekunden (ns) bedeuten.

Die Zeitdauer zwischen zwei erfindungsgemäßen Änderungen der Einschaltzeitdauer bzw. Schaltfrequenz der Schalter S1, S2 liegt somit im Bereich weniger Mirkosekunden (µs) bezeichnet.

Beide Parameter "f_avr" und "nof_steps" sind einstellbar.

Durch eine erfindungsgemäße Veränderung der Schaltfrequenz der Schalter S1, S2 im Bereich von einigen kHz kann beispielsweise eine Reduzierung im Sinne der EMV-Vorschriften erzielt werden.

Wie in Fig. 3 der Erfindungsmeldung dargestellt, wird die Betriebsfrequenz der LLC-Schaltung, dessen Schalter S1, S2 von dem ASIC angesteuert werden, wiederum von dem Microcontroller uC1 vorgegeben. In diesem Microcontroller uC1 ist nunmehr die Sweep-Frequenz-Kurve, wie sie beispielhaft in Fig. 3 gezeigt ist, fest vorabgelegt

Der zuvor erwähnte 100 Hz-Rippel am Ausgang der PFC-Schaltung A wird normalerweise durch die LLC-Schaltung ausgeregelt. Somit ergibt sich bereits durch diese Regelschleife für den Betrieb, d.h. für die Taktung der LLC-Schaltung, eine Frequenzänderung für die Schalter S1, S2.

Indessen ergibt sich dieser Effekt nur, wenn eine ausreichend hohe Leistung der LED-Strecke zugeführt werden soll.

Somit kann der künstliche fest vorgegebene Frequenz-Sweep gemäß der vorliegenden Erfindung selektiv nur dann zuschaltbar bzw. verstärkbar vorgesehen sein, wenn eine niedrige Lichtleistung angefordert ist, bei der die Schwankung (Rippel) in der Ausführspannung der PFC-Schaltung nicht von selbst zu einem Frequenz-Sweep der LLC-Schaltung führt.

Es kann somit vorgesehen sein, dass dieser Sweep-Betrieb adaptiv, d.h. beispielsweise auch selektiv abhängig von dem aktuellen Dimmwert der LED-Strecke ausgeführt werden kann. Insbesondere kann er nur ausgeführt werden, wenn die Lichtleistung unter einen vorgegebenen Schwellenwert liegt.

Wenn beispielsweise die PFC-Schaltung eine Ausgangsspannung mit einem Rippel mit einer Frequenz von 100 Hz bereitstellt, wird die Betriebsfrequenz des LLC-Schaltung gezielt mit einer Sweep-Frequenz im Bereich von kHz beaufschlagt. Darüber hinaus ist der Frequenzhub relativ gering, so dass sich die im Bereich der Sweep-Frequenz liegende Schwankung der Leistungsbereitstellung in der Lichtleistung für den Menschen sichtbar auch dann nicht niederschlägt, wenn der weitere Konverter H nicht in der Lage sein sollte, diese Schwankungen auszuregeln.

Dadurch, dass die Sweep-Frequenz der LLC-Schaltung im Bereich von kHz gelegt wird, ist sichergestellt, dass es auch keine niederfrequenten Schwebungseffekte in Zusammenwirkung mit dem 100Hz-Rippel an der Ausgangsspannung des PFCs gibt.

Beispielsweise kann, wenn der zeitliche Mittelwert der Betriebsfrequenz der LLC-Schaltung in einen Bereich zwischen 80 kHz und 100 kHz liegt, der Frequenzhub d.h. der symmetrische Frequenz-Sweep in einem Bereich von wenigen kHz liegen.

Optional kann auch die Betriebsfrequenz für einen Schalter der aktiven PFC-Schaltung (A) frequenzmoduliert sein . Dieser erfindungsgemäße gezielte PFC-Sweep Modus lässt sich insbesondere bei DC-Betrieb - d.h. wenn die Eingangsspannung Vmains eine DC-Spannung ist - in Zusammenhang mit der vorliegenden Erfindung verwenden.

Die Taktfrequenz der LLC-Schaltung wird abhängig von einer Erfassung der Busspannung, d.h. der vom PFC bereitgestellten Spannung durchgeführt.

Wenn nunmehr bei DC-Versorgung - z.B. im Notbeleuchtungsfall - dem PFC ein künstlicher Sweep Modus wiederum im Sinne eines Stellbetriebs aufgeprägt wird, kann somit die bei einer Vorwärts- bzw. Feedforward-Steuerung von der Busspannung abhängige Taktung der LLC-Schaltung durch den künstlichen Sweep Modus der PFC-Schaltung sich ergebenden Rippel in der Ausgangsspannung des PFCs bereits zu einer ausreichenden EMV-Erfassung führen.

Somit kann also der Sweep Modus der LLC-Schaltung auch indirekt über den Sweep Modus des PFCs eingestellt werden.

Alternativ kann vorgesehen sein, dass der Rippel durch den Sweep Modus des PFCs nicht ausreichend ist für eine gewünschte EMV-Verbesserung der LLC-Schaltung, so dass zusätzlich noch zu dem PFC Sweep Modus der Sweep Modus des LLCs aktivierbar ist.

Vorzugsweise ist der PFC Sweep Modus in diesem Fall wesentlich niedriger, beispielsweise mehrere 100 Hz, im Vergleich zum Sweep Modus der LLC-Schaltung, so dass sich auch bei Aktivierung beider Sweep Modi von PFC-Schaltung und LLC-Schaltung keine niederfrequenten Schwebungen und somit Störungen ergeben.

### Bezugszeichenliste:

- 20: Wechselrichter
- 21: Mittenpunkt des Wechselrichters 20
- 22: LLC-Resonanzkreis
- A: PFC-Schaltung
- B: resonanter Konverter
- C: Steuereinheit
- D: Schnittstelle
- E: galvanische Entkopplung
- F: galvanische Entkopplung
- G: galvanische Entkopplung
- H: Konverter (Konstantstromquelle)
- I: Steuereinheit
- J: Temperatur-Sensor
- K: Lüfter
- LVPS: Niederspannungs-Stromversorgung
- S1, S2: Schalter
- T: Transformator
- Vbus: Busspannung
- Vmains: Eingangsspannung

## Patentansprüche

1. Betriebsgerät für Lasten in Form von Leuchtmitteln, insbesondere für LEDs, wobei das Betriebsgerät aufweist:
- einen getakteten Konverter (B) umfassend ein Schaltelement (20),
wobei der getaktete Konverter (B) eine LLC-Schaltung, eine getaktete Halbbrückenschaltung oder ein Flyback-Konverter ist,
- eine Steuereinheit (C) zum Schalten des Schaltelements (20) mit einer sich durch eine Regelung des Konverters (B) ergebende Betriebsfrequenz des Konverters (B),
wobei der Betriebsfrequenz des Konverters (B) eine Frequenz-Modulation in Form einer zyklisch wiederkehrenden Beschleunigung und Verlangsamung der Betriebsfrequenz des Konverters (B) mittels Vorwärts- bzw. Feedforward-Steuerung aufgeprägt ist,
wobei die Betriebsfrequenz des Konverters (B) im zeitlichen Mittel konstant gehalten wird,
**dadurch gekennzeichnet,**
**dass** die als Vorwärts- bzw. Feedforward-Steuerung definierte Modulierung der Betriebsfrequenz des Konverters (B) selektiv abhängig von einem Dimmwert der Leuchtmittel ausführbar ist.

2. Betriebsgerät nach Anspruch 1,
wobei das Schaltelement (20) als Wechselrichter und insbesondere als Halbbrücken-Wechselrichter ausgestaltet ist.

3. Betriebsgerät nach einem der vorigen Ansprüche,
wobei der Konverter (B) einen Resonanzkreis (22) umfasst, vorzugsweise in Form eines LLC-Resonanzkreises.

4. Betriebsgerät Anspruch 3,
wobei der Resonanzkreis (22) als Serienresonanzkreis oder Parallelresonanzkreis ausgestaltet ist.

5. Betriebsgerät nach einem der vorigen Ansprüche,
wobei der Konverter (B) am Ausgang einer PFC-Schaltung (A) angeschlossen ist und mit einer von der PFC-Schaltung (A) erzeugten Busspannung (VBus) gespeist ist.

6. Betriebsgerät nach Anspruch 5,
wobei eine Betriebsfrequenz der PFC-Schaltung (A) frequenzmoduliert ist.

7. Betriebsgerät nach einem der vorigen Ansprüche,
wobei dem Konverter (B) eine galvanische Entkopplung (F) in Form beispielsweise eines Transformators (T) nachgeschaltet ist.

8. Betriebsgerät nach Anspruch 7,
wobei dem Konverter (B) der Transformator (T) nachgeschaltet ist und wobei dem Transformator (T) ein weiterer Konverter (H) zur Erzeugung eines Konstantstroms für die Leuchtmittel nachgeschaltet ist.

9. Betriebsgerät nach einem der vorigen Ansprüche,
wobei bevor die Betriebsfrequenz des Konverters (B) als Vorwärts- bzw. Feedforward-Steuerung moduliert wird, zunächst ein Nominalwert für die Betriebsfrequenz berechnet wird.

10. Verfahren zum Betrieb eines Betriebsgeräts für Lasten in Form von Leuchtmitteln, insbesondere für LEDs, wobei das Betriebsgerät einen getakteten Konverter (B) mit einem Schaltelement (20) aufweist, wobei der getaktete Konverter (B) eine LLC-Schaltung, eine getaktete Halbbrückenschaltung oder ein Flyback-Konverter ist, wobei das Verfahren folgende Schritte aufweist:
- Schalten des Schaltelements (20) mit einer Betriebsfrequenz des Konverters (B), wobei sich die Betriebsfrequenz des Konverters (B) durch eine Regelung des Konverters ergibt,
- Modulieren der Betriebsfrequenz des Konverters (B) in Form einer zyklisch wiederkehrenden Beschleunigung und Verlangsamung der Betriebsfrequenz des Konverters (B) mittels Vorwärts- bzw. Feedforward-Steuerung, wobei die Betriebsfrequenz des Konverters (B) im zeitlichen Mittel konstant gehalten wird,
**dadurch gekennzeichnet**
**dass** die als Vorwärts- bzw. Feedforward-Steuerung definierte Modulierung der Betriebsfrequenz des Konverters (B) selektiv abhängig von einem Dimmwert der Leuchtmittel ausgeführt wird.

## Claims

1. An operating device for loads in the form of lighting means, in particular, for LEDs, wherein the operating device has:
- a clocked converter (B) having a switching element (20),
wherein the clocked converter (B) is an LLC circuit, a clocked half-bridge circuit or a flyback converter,
- a control unit (C) for switching the switching element (20) with an operating frequency of the converter (B) resulting from a control of the converter (B),
wherein the operating frequency of the converter (B) is impressed on a frequency modulation in the form of a cyclically recurring acceleration and deceleration of the operating frequency of the converter (B) by means of a forward or feedforward control,
wherein the operating frequency of the converter (B) is kept constant on average over time,
**characterized in**
**that** the modulation of the operating frequency of the converter (B) defined as a forward or feedforward control can be carried out selectively dependent on a dimming value of the lighting means.

2. An operating device according to Claim 1,
wherein the switching element (20) is designed as an inverter and in particular as a half-bridge inverter.

3. An operating device according to any one of the preceding claims,
wherein the converter (B) comprises a resonant circuit (22), preferably in the form of an LLC resonant circuit.

4. An operating device according to Claim 3,
wherein the resonant circuit (22) is designed as a series resonant circuit or parallel resonant circuit.

5. An operating device according to any one of the preceding claims,
wherein the converter (B) is connected to the output of a PFC circuit (A) and is supplied with a bus voltage (VBus) generated by the PFC-circuit (A).

6. An operating device according to Claim 5,
wherein an operating frequency of the PFC-circuit (A) is frequency modulated.

7. An operating device according to any one of the preceding claims,
wherein a galvanic decoupling (F) in the form, for example, of a transformer (T) is connected downstream of the converter (B).

8. An operating device according to Claim 7,
wherein the converter (B) is connected downstream of the transformer (T) and wherein a further converter (H) for generating a constant current for the lighting means is connected downstream of the transformer (T).

9. An operating device according to any one of the preceding claims,
wherein before the operating frequency of the converter (B) is modulated as a forward or feedforward control, initially a nominal value for the operating frequency is calculated.

10. A method for operating an operating device for loads in the form of lighting means, in particular for LEDs, wherein the operating device has a clocked converter (B) with a switching element (20),
wherein the clocked converter (B) is an LLC-circuit, a half-bridge circuit or a flyback converter, wherein the method has the following steps:
- Switching of the switching element (20) with an operating frequency of the converter (B),
wherein the operating frequency of the converter (B) results from the control of the converter,
- modulation of the operating frequency of the converter (B) in the form of a cyclically recurring acceleration and deceleration of the operating frequency of the converter (B) by means of a forward or feedforward control, wherein the operating frequency of the converter (B) is kept constant on average over time,
**characterized in**
**that** the modulation of the operating frequency of the converter (B) defined as a forward or feedforward control can be carried out selectively dependent on a dimming value of the lighting means.

## Revendications

1. Appareil destiné au fonctionnement de charges sous la forme de moyens lumineux, en particulier pour des LED, l'appareil destiné au fonctionnement comportant :
- un convertisseur (B) cadencé comprenant un élément de commutation (20),
le convertisseur (B) cadencé étant un circuit LLC, un circuit en demi-pont cadencé ou un convertisseur indirect,
- une unité de commande (C) destinée à la commutation de l'élément de commutation (20) avec une fréquence de service du convertisseur (B) résultant d'une régulation du convertisseur (B),
une modulation de fréquence sous la forme d'une accélération ou d'un ralentissement de la fréquence de service du convertisseur (B) qui revient de façon cyclique étant imposée à la fréquence de service du convertisseur (B) au moyen d'une commande à action directe ou d'une commande prédictive,
la fréquence de service du convertisseur (B) étant maintenue constante en moyenne dans le temps,
**caractérisé en ce que**
la modulation de la fréquence de service du convertisseur (B) définie en tant que commande à action directe ou respectivement prédictive peut être réalisée sélectivement en fonction d'une valeur de gradation des moyens lumineux.

2. Appareil destiné au fonctionnement selon la revendication 1,
l'élément de commutation (20) étant constitué en tant qu'onduleur et en particulier en tant qu'onduleur en demi-pont.

3. Appareil destiné au fonctionnement selon l'une des revendications précédentes, le convertisseur (B) comprenant un circuit résonnant (22), de préférence sous la forme d'un circuit résonnant LLC.

4. Appareil destiné au fonctionnement selon la revendication 3,
le circuit résonnant (22) étant constitué en tant que circuit résonnant série ou circuit résonnant parallèle.

5. Appareil destiné au fonctionnement selon l'une des revendications précédentes, le convertisseur (B) étant connecté à la sortie d'un circuit PFC (A) et étant alimenté avec une tension de bus (VBus) produite par le circuit PFC (A).

6. Appareil destiné au fonctionnement selon la revendication 5,
une fréquence de service du circuit PFC (A) étant modulée en fréquence.

7. Appareil destiné au fonctionnement selon l'une des revendications précédentes, une isolation (F) galvanique sous forme par exemple d'un transformateur (T) étant montée en aval du convertisseur (B).

8. Appareil destiné au fonctionnement selon la revendication 7,
le transformateur (T) étant monté en aval du convertisseur (B), et un autre convertisseur (H) étant monté en aval du transformateur (T) pour la production d'un courant constant pour les moyens lumineux.

9. Appareil destiné au fonctionnement selon l'une des revendications précédentes, une valeur nominale pour la fréquence de service étant d'abord calculée avant que la fréquence de service du convertisseur (B) soit modulée en tant que commande à action directe ou respectivement prédictive.

10. Procédé destiné à faire fonctionner un appareil destiné au fonctionnement de charges sous la forme de moyens lumineux, en particulier pour des LED, l'appareil destiné au fonctionnement comportant un convertisseur (B) cadencé doté d'un élément de commutation (20),
le convertisseur (B) cadencé étant un circuit LLC, un circuit en demi-pont cadencé ou un convertisseur indirect, le procédé comportant les étapes suivantes :
- commutation de l'élément de commutation (20) avec une fréquence de service du convertisseur (B),
la fréquence de service du convertisseur (B) résultant d'une régulation du convertisseur,
- modulation de la fréquence de service du convertisseur (B) sous la forme d'une accélération ou d'un ralentissement qui revient de façon cyclique de la fréquence de service du convertisseur (B)
au moyen d'une commande à action directe ou respectivement prédictive, la fréquence de service du convertisseur (B) étant maintenue constante en moyenne dans le temps, **caractérisé en ce que**
la modulation, définie en tant que commande à action directe ou respectivement prédictive, de la fréquence de service du convertisseur (B) est réalisée sélectivement en fonction d'une valeur de gradation des moyens lumineux.
